# EUROPÄISCHE PATENTSCHRIFT

(11) **EP 2 542 486 B1**
(45) Veröffentlichungstag und Bekanntmachung des Hinweises auf die Patenterteilung: **13.04.2016**
(21) Anmeldenummer: 11705545.9
(22) Anmeldetag: 23.02.2011
(51) Int. Cl.: B65G 1/137

(54) **UNIVERSELLER HOCHLEISTUNGSKOMMISSIONIERARBEITSPLATZ FÜR SCHNELLDREHER UND LANGSAMDREHER**
UNIVERSAL HIGH-PERFORMANCE ORDER-PICKING WORKSTATION FOR FAST-MOVING ITEMS AND SLOW-MOVING ITEMS
POSTE DE TRAVAIL DE PRÉPARATION À HAUTES PERFORMANCES UNIVERSEL POUR TAUX DE ROTATION RAPIDE ET FAIBLE TAUX DE ROTATION

(30) Priorität: 04.03.2010 DE 102010010305
(43) Veröffentlichungstag der Anmeldung: 09.01.2013
(73) Patentinhaber: SSI Schäfer Peem GmbH, 8051 Graz (AT)
(72) Erfinder: WINKLER, Max, A-8010 Graz (AT); SUESS, Heiko, A-8044 Graz (AT)
(74) Vertreter: Witte, Weller & Partner Patentanwälte mbB
(86) Internationale Anmeldenummer: PCT/EP2011/052696
(87) Internationale Veröffentlichungsnummer: WO 2011/107385

(56) Entgegenhaltungen:
- EP-A1- 0 847 939
- WO-A1-2005/066046
- WO-A1-2010/017873
- DE-A1- 3 343 858

## Beschreibung

Die vorliegende Erfindung betrifft einen automatisierten Kommissionierarbeitsplatz zum manuellen Kommissionieren von Schnelldrehern und Langsamdrehern aus Lagerbehältern in Auftragsbehälter gemäß einem Kommissionierauftrag, der üblicherweise aus mehreren verschiedenen Artikeln besteht. Die Erfindung betrifft ferner ein Lager- und Kommissioniersystem mit einem derartigen Kommissionierarbeitsplatz sowie ein Verfahren zum Zuführen und Abführen von Behältern von und zu einem derartigen Kommissionierarbeitsplatz. Die Erfindung arbeitet nach dem Prinzip "Ware-zum-Mann".

In dem europäischen Patent EP 0 847 939 B2 wird ein gattungsgemäßer Kommissionierplatz in einer Regalgasse zwischen zwei Regalen eines AKL-Systems (AKL = automatisiertes Kleinteilelager) beschrieben. Ein Kommissionierer entnimmt Artikel aus Lagerbehältern, die entlang einer Längsseite der Regale in Durchlaufkanälen angedient werden. Es gibt Durchlaufkanäle für Schnellläufer und Durchlaufkanäle für Langsamläufer. Als Schnellläufer werden Artikel bezeichnet, die häufig bzw. in größeren Mengen benötigt werden, während Langsamläufer solche Artikel sind, die selten bzw. in kleinen Mengen benötigt werden. In Hüfthöhe der Kommissionierperson wird eine Rollenbahn entlang der Längsseite des Regals geführt, die zum Transport von Auftragsbehältern dient. Die Kommissionierperson kann den Auftragsbehälter mit sich führen, während sie einen Kommissionierbereich (Teilbereich einer Längsseite eines Regals) durchschreitet. Schnellläufer-Durchlaufkanäle werden permanent mit mehreren Schnellläufer-Lagerbehältern mittels eines Regalbediengeräts (nachfolgend "RBG" genannt) gefüllt, welches entlang einer Rückseite des Regals vorgesehen ist, wobei die Kommissionierperson aus der Vorderseite des Regals kommissioniert. Sobald ein Schnellläufer-Lagerbehälter leer ist, wird er von der Kommissionierperson von Hand aus dem zugeordneten Durchlaufkanal entnommen und auf die Rollenbahn gesetzt, auf der eigentlich die Auftragsbehälter transportiert werden. Leere Schnellläufer-Lagerbehälter fahren also durch den gesamten Kommissionierbereich, bis sie an einen Knotenpunkt gelangen, von wo aus sie an einen Befüllpunkt zur erneuten Einlagerung in das Regal verbracht werden. Langsamläufer-Durchlaufkanäle zeichnen sich dadurch aus, dass sie als Gefällebahn ausgebildet sind und immer nur einen Langsamläufer-Lagerbehälter vorrätig halten. Der Langsamläufer-Dürchlaufkänal weist eine Sperreinrichtung auf, so dass ein fertig bearbeiteter Langsamläufer-Lagerbehälter von der Kommissionierperson händisch nach hinten in Richtung der Rückseite des Regals zurückgeschoben werden kann und dann durch die Sperreinrichtung dort gehalten wird. In dieser Position ist es möglich, dass das RBG den Langsamläufer-Lagerbehälter abholt und durch einen neuen (anderen) Langsamläufer-Lagerbehälter ersetzt.

Dieser herkömmliche Kommissionierarbeitsplatz, der eigentlich in ein (Lager-) Regal integriert ist und mit einer zusätzlichen Fördereinrichtung versehen ist, die sich entlang einer Längsseite des Regals erstreckt, hat eine relativ geringe Kommissionierleistung. Weil die Fördereinrichtung (Rollenbahn) für die Auftragsbehälter durch den Kommissionierbereich verläuft, können nur relativ wenige Lagerbehälter gleichzeitig angedient werden. Da die Schnellläufer-Durchlaufkanäle unterhalb der Rollenbahn für die Auftragsbehälter angeordnet sind, muss die Kommissionierperson sich zum Entfernen von leeren Schnellläufer-Lagerbehältern bücken und diese auf die Rollenbahn für die Auftragsbehälter heben. Dies ist ergonomisch ungünstig. Außerdem muss zur Trennung von fertigen Auftragsbehältern und leeren Lagerbehältern eine Überwachungseinrichtung vorgesehen werden, die den gemischten Behälterstrom erkennt und entsprechende Trennvorgänge einleitet. Dies erhöht die Anschaffungskosten und den Steuerungsaufwand (zumindest beim Materialflussrechner).

Ein weiterer Kommissionierarbeitsplatz mit vertikalen Umlaufförderern für Behälter wird in der EP 2 098 464 A1 offenbart.

Es ist daher eine Aufgabe, einen verbesserten automatisierten Kommissionierarbeitsplatz zur manuellen Kommissionierung von Schnelldrehern und Langsamdrehern aus Lagerbehältern in Auftragsbehälter, ein verbessertes Lager- und Kommissioniersystem sowie ein verbessertes Kommissionierverfahren bereitzustellen.

Diese Aufgabe wird durch einen automatisierten Kommissionierarbeitsplatz zum manuellen Kommissionieren von Artikeln aus Lagerbehältern in zumindest einen Auftragsbehälter gemäß einem Kommissionierauftrag gelöst, der aus mehreren verschiedenen Artikeln bestehen kann, wobei die Lagerbehälter Schnelldreher-Lagerbehälter für schnelldrehende Artikel und Langsamdreher-Lagerbehälter für langsamdrehende Artikel aufweisen, die dem Kommissionierarbeitsplatz zusammen mit dem mindestens einen Auftragsbehälter zugeführt werden, wobei der Kommissionierarbeitsplatz eine Vielzahl von unidirektional betreibbaren Lagerbehälter-Durchlaufkanälen und mindestens einen bidirektional betreibbaren Auftragsbehälter-Bereitstellungskanal aufweist, wobei jedem Auftragsbehälter-Bereitstellungskanal ein Auftragsbehälter zugewiesen ist und wobei jedem Durchlaufkanal ein oder mehrere Schnelldreher-Lagerbehälter oder Langsamdreher-Lagerbehälter zugewiesen sind, wobei alle Kanäle ein Ende aufweisen, das einen Andienungsplatz definiert, wobei die Kanäle im Wesentlichen parallel zueinander angeordnet sind und wobei die Andienungsplätze nebeneinander und in übereinander angeordneten Andienungsebenen derart angeordnet sind, dass die Andienungsplätze eine "Kommissionierfläche" bzw. einen "Kommissionierraum" definieren, aus der bzw. dem eine Kommissionierperson auf eine ergonomisch günstige Weise in jeden angedienten Lagerbehälter zur Entnahme eines zu kommissionierenden Artikels greifen kann und entnommene Artikel an den zumindest einen Auftragsbehälter abgeben kann.

Schnelldrehende Artikel werden in Durchlaufkanälen bereitgestellt, die vorzugsweise unidirektional betrieben werden. Mittel- und langsamdrehende Artikel werden ebenfalls über einen vorzugsweise unidirektional betriebenen Durchlaufkanal bereitgestellt. Ein oder mehrere Auftragsbehälter werden in vorzugsweise bidirektional betriebenen Bereitstellungskanäleri angedient. Die Enden dieser Kanäle bilden eine (homogene) Kommissionierfläche, durch die keine Fördertechnik zum Transportieren der Auftragsbehälter hindurch verläuft. Damit ist gewährleistet, dass die Kommissionierfläche optimal hinsichtlich der Anzahl von angedienten Behältern ausgenutzt wird. Es wird kein Platz bzw. Raum verschenkt. Die Kommissionierperson muss nahezu keine Hebungen aus dem Rücken durchführen, um Behälter umzusetzen. Die Kommissionierperson, muss sich auch nicht bücken, um häufig benötigte Artikel aus den entsprechenden Lagerbehältern zu entnehmen, da die Schnelldreher-Lagerbehälter alle oberhalb der Auftragsbehälter, zumindest aber auf gleicher Höhe wie die Auftragsbehälter, angeordnet sind.

Vorzugsweise wird ein weiterer Kanal zum Abtransport von vollständig oder teilweise geleerten Lagerbehältern vorgesehen, der parallel zu den anderen Kanälen orientiert ist und dessen eines Ende ebenfalls in der Kommissionierfläche liegt.

Da üblicherweise lediglich die Auftragsbehälter-Bereitstellungskanäle bidirektional betrieben werden, müsste ohne einen weiteren Kanal, der dazu eingerichtet ist, Lagerbehälter aus der Kommissionierfläche zu entfernen, jederzeit sichergestellt sein, dass ein Auftragsbehälter-Bereitstellungskanal frei ist, um einen leeren Lagerbehälter aufnehmen und abführen zu können. Um eine maximale Anzahl von Auftragsbehältern gleichzeitig befüllen zu können, ist es erforderlich, alle Auftragsbehälter-Bereitstellungskanäle mit Auftragsbehältern zu versorgen. Um in dieser Konstellation die leeren Lagerbehälter abführen zu können, ist also ein weiterer Kanal erforderlich, der vorzugsweise wiederum unidirektional betrieben ist, diesmal aber in umgekehrter Richtung, nämlich weg von der Kommissionierfläche.

Bei einer weiteren vorteilhaften Ausgestaltung ist der mindestens eine weitere Kanal mit einer Fördereinrichtung versehen, so dass vollständig oder teilweise geleerte Lagerbehälter automatisiert aus der Kommissionierfläche abgeführt werden können, indem die Kommissionierperson die vollständig oder teilweise geleerten Lagerbehälter von ihrem jeweiligen Andienungsplatz nimmt und manuell in den mindestens einen weiteren Kanal umsetzt.

Die Fördereinrichtung für den weiteren Kanal wird immer dann benötigt, wenn ein Verlauf des weiteren Kanals nicht nach hinten abfällt, sondern annähernd horizontal ist oder ansteigt. Im Falle eines abfallenden Kanalverlaufs, wenn man von der Kommissionierfläche in den weiteren Kanal blickt, kann die weitere Fördereinrichtung für den weiteren Kanal weggelassen werden. Der weitere Kanal ist dann in Form einer Schwerkraftbahn ausgebildet.

Ferner ist es bevorzugt, wenn die Kommissionierfläche ausschließlich Andienungsplätze und das Ende jedes weiteren Kanals aufweist.

Außerdem ist es von Vorteil, wenn der zumindest eine Auftragsbehälter-Bereitstellungskanal und vorzugsweise jeder weitere Kanal in einer untersten Andienungsebene angeordnet sind.

So ist sichergestellt, dass sich die Kommissionierperson beim Abgeben von Artikeln nicht bücken muss. Abzugebende Artikel können einfach in die Auftragsbehälter fallengelassen werden. Leere Lagerbehälter können entnommen werden, ohne dass sich die Kommissionierperson bücken muss, und an den weiteren Kanal nach unten abgegeben werden.

Dazu ist es von Vorteil, wenn die Lagerbehälter-Durchlaufkanäle in den oberen Andienungsebenen angeordnet sind.

Ferner ist es von Vorzug, wenn der Kommissionierarbeitsplatz an eine Fördertechnik zum Zu- und Abführen von Lagerbehältern und/oder Auftragsbehältern angeschlossen ist.

Der Kommissionierarbeitsplatz wird dann von "hinten" gespeist, damit die Kommissionierperson von "vorn" entnehmen kann. Die Zufuhr und die Abfuhr der Behälter erfolgt dann senkrecht auf die Kommissionierperson zu bzw. weg von ihr. Ein Transport in Querrichtung findet in der Kommissionierfläche nicht statt, da die dafür benötigte Fördertechnik Raum in Anspruch nähme, der für Lagerbehälter und Auftragsbehälter zur Andienung benötigt wird.

Bei einer weiteren bevorzugten Ausführungsform sind die Lagerbehälter-Durchlaufkanäle Schwerkraftrollenbahnen, die in Richtung der Kommissionierperson abfallen, und der mindestens eine Auftragsbehälter-Bereitstellungskanal ist mit einer Fördereinrichtung versehen, so dass ein Behälter bidirektional innerhalb des Auftragsbehälter-Bereitstellungskanals transportierbar ist.

Wenn die Lagerbehälter-Durchlaufkanäle als Schwerkraftrollenbahnen realisiert sind, die in Richtung der Kommissionierperson abfallen, wird zum Andienen der Lagerbehälter keine zusätzliche Energie benötigt. Antriebe innerhalb der Durchlaufkanäle entfallen. Dadurch reduzieren sich die Investitionskosten. Der Steuerüngsaufwand wird geringer. Die Kommissionierperson selbst sorgt für die Nachführung von Lagerbehältern.

Wenn jeder Auftragsbehälter-Bereitstellungskanal mit einer Fördereinrichtung versehen ist, kann ein Auftragsbehälter in beiden Richtungen transporttiert werden, d.h. der Auftragsbehälter kann zugeführt oder abgeführt werden. Leere Lagerbehälter können theoretisch auch über einen Auftragsbehälter-Bereitstellungskanal abgeführt werden. Dies ist immer dann von Vorteil, wenn der oder die weiteren Kanäle besetzt oder blockiert sind.

Insbesondere weisen in der Kommissionierfläche solche Andienungsebenen, die Lagerbehälter-Durchlaufkanäle aufweisen, jeweils einen Leuchtpfad auf, der wahlweise derart beleuchtbar ist, dass der Kommissionierperson visuell angezeigt wird, aus welchem angedienten Lagerbehälter ein Artikel entnommen und an welchen Auftragsbehälter der entnommene Artikel abzugeben ist.

Auf diese Weise wird eine optimierte Kommissionierpersonführung erzielt. Die Führung erfolgt visuell. Das Risiko von Fehlkommissionierungen wird so reduziert.

Bei einer weiteren Ausgestaltung sind alle Kanäle senkrecht zur Kommissionierfläche orientiert.

Die senkrechte Orientierung ermöglicht eine maximale Besetzungsdichte von Andienungsplätzen in der Kommissionierfläche.

Außerdem ist es bevorzugt, wenn die Kommissionierfläche eine zusammenhängende Fläche bildet.

In diesem Fall sind die Wege der Kommissionierperson kurz. Insbesondere bei Vorsehung einer visuellen Kommissionierpersonführung hat die Kommissionierperson einen guten Überblick über die von ihr abverlangten Tätigkeiten. Alle Behälter, für die die Kommissionierperson verantwortlich ist, sind gut erreichbar und überschaubar.

Die oben genannte Aufgabe wird ferner durch ein Lager- und Kommissioniersystem gelöst, das aufweist: mindestens einen Kommissionierarbeitsplatz gemäß der Erfindung; ein Behälterregallager, wo die Lagerbehälter zwischengespeichert werden; und eine Auftragsbehälter-Fördertechnik zur Zu- und Abführung von Auftragsbehältern an den und von dem mindestens einen Kommissionierarbeitsplatz.

Vorzugsweise ist der mindestens eine Kommissionierarbeitsplatz derart relativ zum Behälterregallager angeordnet, dass ein RBG des Behälterregallagers Schnelldreher-Lagerbehälter in Querrichtung direkt zwischen dem Behälterregallager und solchen Lagerbehälter-Durchlaufkanälen des mindestens einen Kommissionierarbeitsplatzes transferieren kann, die den Schnelldreher-Lagerbehältern zugewiesen sind.

Lange Transportwege für die Lagerbehälter werden dadurch vermieden. Die Schnelldreher-Lagerbehälter können daher in ausreichender Anzahl innerhalb kürzester Zeit bereitgestellt werden.

Insbesondere ist ferner mindestens eine Lagerbehälter-Fördertechnik zur Zu- und Abführung von Lagerbehältern an die und von den Lagerbehälter-Durchlaufkanälen vorgesehen, die jeweils einerseits mit den Lagerbehälter-Durchlaufkanälen an einer der Kommissionierfläche gegenüberliegenden Seite und andererseits mit dem Behälterregallager verbunden sind.

Die Versorgung mit Schnelldreher-Lagerbehältern und Langsamdreher-Lagerbehältern ist so sichergestellt. Vorzugsweise sind die Förderkreise für die Lagerbehälter und die Aufträgsbehälter voneinander getrennt, so dass ein Steuerungsaufwand möglichst gering gehalten wird. Die Versorgung des Kommissionierarbeitsplatzes mit Lagerbehältern erfolgt von hinten, so dass vorn, wo die Kommissionierfläche angeordnet ist, der gesamte Platz und Raum zur Bereitstellung und Andienung von Lagerbehältern und Auftragsbehältern zur Verfügung steht.

Bei einer bevorzugten Ausgestaltung des Systems ist das Behälterregallager räumlich in mehrere Bereiche aufgeteilt, wobei ein Schnelldreher-Bereich näher relativ zu dem mindestens einen Kommissionierarbeitsplatz als ein Langsamdreher-Bereich liegt.

Der Schnelldreher-Bereich kann z.B. durch ein AKL realisiert werden, wobei ein zugehöriges RBG durch das Regal hindurch greifen kann, um Schnelldreherlagerbehälter direkt (von hinten) in Durchlaufkanäle einzuführen. Der Langsamdreher-Bereich kann z.B. durch ein Karusselllager realisiert werden. Das Karusselliager bietet eine hohe Dynamik hinsichtlich eines Behälterwechsels. Langsamdreher sollten "schnell" zu dem Kommissionierarbeitsplatz transportiert werden, an dem sie benötigt werden. Ein AKL weist im Vergleich eine geringere Dynamik aufgrund der vergleichsweise hohen Zykluszeiten für einen Behälterwechsel auf. Da die Schnelldreher-Lagerbehälter nach einem Kommissionierzugriff am Arbeitsplatz verbleiben und typischerweise mindestens zwei Behälter desselben Artikels in einem Kanal stehen, ist nur bei einem vollständigen Entleeren des Schnelldreher-Lagerbehälters ein entsprechender Nachschub durchzuführen. Dies führt zu einer geringeren Behälterdynamik als bei den Langsamdreher-Lagerbehältern, die nach jedem Zugriff durch einen anderen Langsamdreher-Lagerbehälter (mit anderen benötigten Artikeln) ausgetauscht werden.

Die oben genannte Aufgabe wird ferner durch ein Verfahren zum Zuführen und Abführen von Behältern, umfassend Schnelldreher-Lagerbehälter, Langsamdreher-Lagerbehälter und Auftragsbehälter, zu und von einem Kommissionierarbeitsplatz gemäß der vorliegenden Erfindung gelöst, wobei das Verfahren die folgenden Schritte aufweist: Konfigurieren der Kommissionierfläche derart, dass die Kanäle jeweils einem der verschiedenen Behälter zugewiesen sind; Zuführen solcher Lagerbehälter an die Andienungsplätze in der Kommissionierfläche, die zum Abarbeiten von Kommissionieraufträgen benötigt werden, über unidirektional betriebene Kanäle; Entnehmen von benötigten Artikeln und Abgeben in vorbestimmte Auftragsbehälter; manuelles Umsetzen von nicht mehr benötigten Lagerbehältern in einen bidirektional betriebenen Kanal; und Rücktransportieren der nicht mehr benötigten Lagerbehälter in Richtung eines Behälterregallagers.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht auf einen Kommissionierarbeitsplatz gemäß der vorliegenden Erfindung, inklusive einer Fördertechnik-Anbindung, aber ohne Lagerbereich;
- Fig. 2: eine perspektivische Ansicht des Kommissionierarbeitsplatzes der Fig. 1, wobei man von hinten auf den Kommissionierarbeitsplatz blickt;
- Fig. 3: eine perspektivische Ansicht von vorn auf eine Abwandlung eines Kommissionierarbeitsplatzes gemäß der vorliegenden Erfindung;
- Fig. 4: eine Draufsicht auf ein exemplarisches Lager- und Kommissioniersystem gemäß der vorliegenden Erfindung, das einen oder mehrere Kommissionierarbeitsplätze gemäß der vorliegenden Erfindung aufweist; und
- Fig. 5: ein Flussdiagramm des erfindungsgemäßen Verfahrens.

In der nachfolgenden Beschreibung der Erfindung werden Behälter als Ladehilfsmittel für zu kommissionierende Artikel genannt. Im Nachfolgenden wird unter einem "Behälter" jede Art von Ladungsträger verstanden, der geeignet ist, zu kommissionierende Artikel an einen erfindungsgemäßen Kommissionierarbeitsplatz zu fördern. In diesem Sinne umfasst der Begriff "Behälter" auch z.B. Tablare, Kartons und Ähnliches. Die Artikel können auch ohne Ladungsträger angedient werden.

Unter "Schnelldrehern" (bzw. "Schnellläufern") und "Langsamdrehern" (bzw. "Langsamläufern") werden nachfolgend A-Artikel bzw. B- oder C-Artikel eines Artikelsortiments verstanden, das nach bestimmten Kriterien, z.B. Absatzmenge, Umschlaghäufigkeit oder Zugriffhäufigkeit, klassifiziert ist. A-Artikel haben hohe Absatzmengen, Umschlagraten oder Zugriffhäufigkeiten, C-Artikel haben geringe. Die Grenzen zwischen A-, B- und C-Gruppen werden im Einzelfall festgelegt. Die Sortierung eines Kriteriums nach den Auftrittshäufigkeiten ergibt die so genannte Lorenz-Kurve. Wenn im Nachfolgenden von "Schnelldrehern" gesprochen wird, sind "A-Artikel" gemeint. Wenn von "Langsamdrehern" gesprochen wird, sind "Bund/oder C-Artikel" gemeint. Es versteht sich, dass die Langsamdreher auch um die Mitteldreher ("B-Artikel") erweitert werden können. Zur Vereinfachung der Darstellung wird nachfolgend nur noch zwischen Schnelldrehern und Langsamdreher unterschieden werden. Diese Darstellung ist jedoch um beliebige Zwischenkategorien erweiterbar.

Der in der Beschreibung der nachfolgenden Figuren erwähnte Kommissionierarbeitsplatz 10 gemäß der vorliegenden Erfindung eignet sich u.A. auch zur Batch-Kommissionierung. Unter einer "Batch" versteht man üblicherweise eine Zusammenfassung von mehreren Aufträgen zu einer geordneten Menge oder Liste von Aufträgen. Ein Auftrag besteht aus einer oder mehreren Auftragspositionen (Auftragszeilen, auch "order lines" genannt) mit der jeweiligen Menge eines Artikels. Beim Batch-Kommissionieren werden mehrere Aufträge parallel bearbeitet, indem z.B. alle Artikel eines Lagerbehälters entnommen werden und auf verschiedene Auftragsbehälter verteilt werden, die diesen Artikeltyp gemäß ihrem jeweiligen Kommissionierauftrag benötigen. Die Batch-Kommissionierung ist für die vorliegende Erfindung aber sekundär. Am erfindungsgemäßen Kommissionierarbeitsplatz muss nicht batchweise kommissioniert werden.

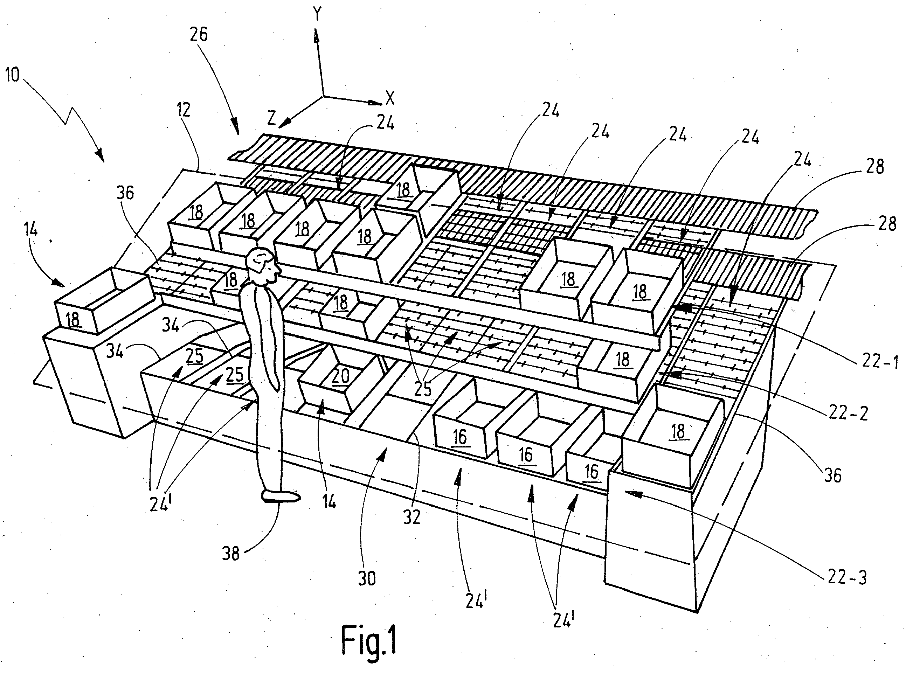

In Fig. 1 ist ein Kommissionierarbeitsplatz 10 gemäß der vorliegenden Erfindung in einer perspektivischen Draufsicht gezeigt. Er erstreckt sich entlang einer Längsrichtung X.

Der Kommissionierarbeitsplatz 10 weist eine so genannte "Kommissionierfläche" 12 auf, die eine Fläche bzw. einen quaderförmigen Raum definiert, in der bzw. dem alle zur Abarbeitung eines Kommissionierauftrags benötigten Behälter (Lagerbehälter und Auftragsbehälter) angedient werden. In der Fig. 1 ist die Kommissionierfläche 12 mit einer Strichlinie umrandet.

Am Kommissionierarbeitsplatz 10 werden Lagerbehälter 14 und Auftragsbehälter 16 angedient. Die Lagerbehälter 14 sind hier exemplarisch in Schnelldreher-Lagerbehälter 18 und Langsamdreher-Lagerbehälter 20 unterteilt. Die Schnelldreher-Lagerbehälter 18 werden in einer ersten, oberen Andienungsebene 22-1 bereitgestellt. Es können eine oder mehrere Andienungsebenen 22 vorgesehen sein. Beim Kommissionierarbeitsplatz 10 der Fig. 1 ist ferner eine mittlere Andienungsebene 22-2 und eine untere Andienungsebene 22-3 vorgesehen. Die mittlere Andienungsebene 22-2 dient hier exemplarisch wiederum ausschließlich zur Bereitstellung von Schnelldreher-Lagerbehältern 18. In der untersten Andienungsebene 22-3 werden hier exemplarisch sechs Auftragsbehälter 16 über vorzugsweise bidirektional betriebene Bereitstellungskanäle 24' angedient, wobei lediglich die rechten drei Auftragsbehälter-Bereitstellungskanäle 24' mit jeweils einem (einzigen) Auftragsbehälter 16 gezeigt sind. Die linken drei Auftragsbehälter-Bereitstellungskanäle 24' sind unbesetzt. In unidirektional betriebenen Durchlaufkanälen bewegen sich die Behälter nur in einer Richtung innerhalb des Kanals. In den bidirektional betriebenen Bereitstellungskanälen können sich die Behälter vor und zurück innerhalb des Kanals bewegen. Die Kanäle erstrecken sich vorzugsweise in Querrichtung Z.

In der Mitte der untersten Andienungsebene 22-3 wird ferner ein Langsamdreher-Lagerbehälter 20 in einem vorzugsweise unidirektional betriebenen Durchlaufkanal 24 angedient, der zur Aufnahme mehrerer Lagerbehälter 14 ausgelegt ist. Rechts neben dem Lagerbehälter-Durchlaufkanal 24 für den Langsamdreher-Lagerbehälter 20 ist ein weiterer Kanal 30 zum Abführen von Behältern, insbesondere vollständig oder teilweise geleerten Lagerbehältern 14, vorgesehen, der vorzugsweise ebenfalls unidirektional betrieben wird, nämlich entgegengesetzt zum Lagerbehälter-Durchlaufkanal 24 für den Langsamdreher-Lagerbehälter 20.

Die beiden oberen Andienungsebenen 22-1 und 22-3 weisen exemplarisch jeweils acht nebeneinander angeordnete Lagerbehälter-Durchlaufkanäle 24 auf, die zur einfach- oder mehrfachtiefen Lagerung von Lagerbehältern 14 geeignet sind. Im Beispiel der Fig. 1 sind die Lagerbehälter-Durchlaufkanäle 24 doppelttief ausgebildet. In der ersten Andienungsebene 22-1 sind von links nach rechts die ersten vier Lagerbehälter-Durchlaufkanäle 24 besetzt, wobei der vierte Lagerbehälter-Durchlaufkanal 24 doppelt mit einem Schnelldreher-Lagerbehälter 18 besetzt ist. Die nächsten beiden Lagerbehälter-Durchlaufkanäle 24 in der ersten Andienungsebene 22-1 sind frei. Die letzten beiden Lagerbehälter-Durchlaufkanäle 24 sind jeweils mit einem Schnelldreher-Lagerbehälter 18 versehen.

Die zweite Andienungsebene 22-2 ist analog zur ersten Andienungsebene 22-1 aufgebaut und umfasst somit ebenfalls acht Lagerbehälter-Durchlaufkanäle 24, wobei hier lediglich der zweite, vierte und letzte Lagerbehälter-Durchlaufkanal 24 mit jeweils einem Schnelldreher-Lagerbehälter 18 besetzt ist. Seitlich zur zweiten Andienungsebene 22-2 sind zwei weitere Lagerbehälter-Durchlaufkanäle 24 angeordnet, die etwas länger als die Lagerbehälter-Durchlaufkanäle 24 der gerade beschriebenen acht Lagerbehälter-Durchlaufkanäle 24 sind, so dass zwei weitere Schnelldreher-Lagerbehälter 18 angedient werden können, wie es in Fig. 1 gezeigt ist.

Es versteht sich, dass mehr oder weniger Andienungsebenen 22 vorgesehen werden können. Ferner versteht es sich, dass die Anordnung der Schnelldreher-Lagerbehälter 18, der Langsamdreher-Lagerbehälter 20 sowie der Aufträgsbehälter 16 beliebig innerhalb der Kommissionierfläche 12 konfiguriert werden kann.

Die vorderen Enden der Lagerbehälter-Durchlaufkanäle 24 und der Auftragsbehälter-Bereitstellungskanäle 24' definieren jeweils einen so genannten Andienungsplatz 25, wo ein Behälter zum Zwecke einer Kommissionierung bereitgestellt wird.

Die Lagerbehälter-Durchlaufkanäle 24 sind hier in Form von Gefällebahnen oder geneigten Schwerkraftbahnen realisiert, so dass Lagerbehälter 14 lediglich von einer Fördertechnik 26 in die Durchlaufkanäle 24 abgeschoben werden müssen, um an einen jeweiligen Andienungsplatz 25 zu gelangen.

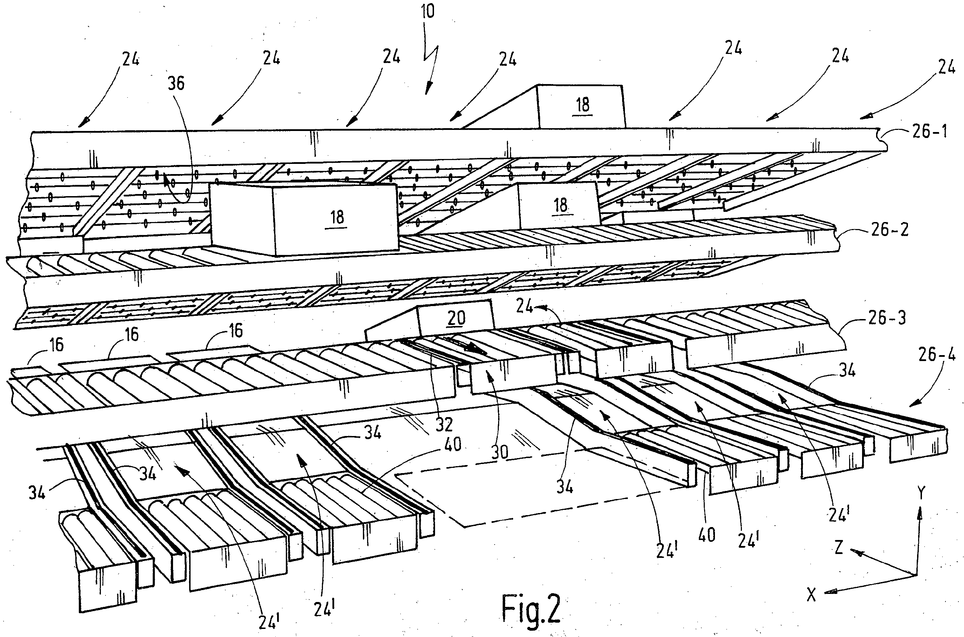

In der Fig. 1 sind zwei Fördertechniken 28 in Form von angetriebenen Rollenbahnen zur Zuführung von Schnelldreher-Lagerbehältern 18 gezeigt (vgl. auch Fig. 2). Die Rollenbahnen 28 grenzen hier direkt an die Lagerbehälter-Durchlaufkanäle 24 an, so dass mittels Schiebern, Riemenaushebern und Ähnlichem Lagerbehälter 14 in die Durchlaufkanäle 24 abgegeben werden können.

Die Schwerkraftbahnen 36 können mit lose drehenden Rollen versehen sein, um ein sicheres Zuführen von Lagerbehältern 14 an ihre jeweiligen Andienungsplätze 25 zu gewährleisten.

Die Auftragsbehälter-Bereitstellungskanäle 24' weisen jeweils eine Fördereinrichtung 34 auf, die bidirektional betrieben wird. In der einen Richtung werden Auftragsbehälter 16 zur Kommissionierfläche 12 transportiert, und in der entgegengesetzten Richtung werden (fertig kommissionierte) Auftragsbehälter 16 aus der Kommissionierfläche 12 heraus transportiert.

Der weitere (Abzugs-)Kanal 30 weist vorzugsweise ebenfalls eine Fördereinrichtung 32 auf, es sei denn, der Kanal 30 ist ebenfalls in Form einer Schwerkraftbahn 36 realisiert, so dass ein Behälter (Lager- oder Auftragsbehälter), der auf den Andienungsplatz 25 des weiteren Kanals 30 gesetzt wird, selbstständig in Richtung einer dem Kanal 30 zugeordneten Fördertechnik (nicht gezeigt) transportiert wird.

Der Kommissionierarbeitsplatz der Fig. 1 weist hier exemplarisch achtzehn Andienungsplätze 25 für die Schnelldreher-Lagerbehälter 18 auf (vgl. die beiden oberen Andienungsebenen 22-1 und 22-2 plus die zwei seitlich vorstehenden Andienungsplätze 25 auf dem Niveau der zweiten Andienungsebenen 22-2), Der Kommissionierarbeitsplatz 10 umfasst hier exemplarisch des Weiteren sechs Andienungsplätze 25 für Auftragsbehälter 16 (vgl. die drei jeweils äußeren Andienungsplätze in der untersten Andienungsebene 22-3) sowie einen mittleren Andienungsplatz 25 für einen Langsamdreher-Lagerbehälter 20. Der weitere Kanal 30 ist optional und kann auch weggelassen werden. In diesem Fall werden leere Lagerbehälter 14 nicht, wie es ursprünglich gedacht ist, über den weiteren Kanal 30 abgeführt, sondern sie werden auf einen "leeren" Auftragsbehälter-Bereitstellungskanal 24' aufgesetzt, sofern dieser vorhanden ist. Es versteht sich, dass bei dieser Konstellation immer mindestens einer der Auftragsbehälter-Bereitstellungskanäle 24' freigehalten werden muss, was gegebenenfalls die Leistung des Kommissionierarbeitsplatzes 10 verringern kann.

Fig. 2 zeigt den Kommissionierarbeitsplatz 10 der Fig. 1 von hinten.

Es ist deutlich zu erkennen, dass hier exemplarisch vier Fördertechniken 24-1 bis 24-4 zur Zu- und Abführung der Lagerbehälter 14 und Auftragsbehälter 16 eingesetzt werden. Über die oberste Lagerbehälter-Fördertechnik 26-1 werden Schnelldreher-Lagerbehälter 18 zugeführt. Über die zweitoberste Lagerbehälter-Fördertechnik 26-2, die genau wie die erste Lagerbehälter-Fördertechnik 26-1 hier exemplarisch als Rollenbahn ausgebildet ist, werden ebenfalls Schnelldreher-Lagerbehälter 18 zugeführt. Darunter ist eine dritte Lagerbehälter-Fördertechnik 26-3 angeordnet, die hier zur Zuführung von Langsamdreher-Lagerbehältern 20 und zum Abführen von vollständig oder teilweise geleerten Lagerbehältern 14 dient, die in den weiteren Kanal 30 gesetzt werden.

Unterhalb der dritten Lagerbehälter-Fördertechnik 26-3 ist eine Auftragsbehälter-Fördertechnik 26-4 angeordnet, die sich mit den Auftragsbehälter-Bereitstellungskanälen 24' teilweise überlappen kann. Die Auftragsbehälter-Fördertechnik 26-4 dient zum Zu- und Abführen von leeren und fertig kommissionierten Auftragsbehältern 16.

Es versteht sich, dass andere Förderertypen als Rollenbahnen eingesetzt werden können. Dies ist exemplarisch im Bereich der Auftragsbehälter-Fördertechnik 26-4 mit einer Fläche angedeutet, die mit einer Strichlinie umrandet ist. Es können z.B. Gurt- oder Riemenförderer eingesetzt werden.

Ferner versteht es sich, dass die Anzahl von Andienungsebenen 22 und Fördertechnikebenen 26 beliebig wählbar sind. Ferner wäre es möglich, sowohl Auftragsbehälter 16 als auch Lagerbehälter 14 auf ein und derselben Fördertechnik 26 zu transportieren.

Aus ergonomischen Gesichtspunkten erscheint es am sinnvollsten, die Auftragsbehälterhandhabung in eine unterste Betriebsebene (Andienungsebene) zu legen. Dann muss sich eine Kommissionierperson 38 (vgl. Fig. 1) am wenigsten bücken. Gegriffene Artikel können bestenfalls einfach in die Auftragsbehälter 16 fallengelassen werden. Leere Lagerbehälter 14 müssen nicht angehoben, sondern können abgesenkt werden, um in den weiteren Kanal 30 abgegeben zu werden.

Die Länge des Lagerbehälter-Durchlaufkanals 24 für Langsamdreher-Lagerbehälter 20 wird vorzugsweise mehrfachtief gewählt, so dass mehrere Langsamdreher-Lagerbehälter 20 hintereinander zwischengespeichert werden können, bis sie zum Andienungsplatz 25 vorrutschen. Die Langsamdreher-Lagerbehälter 20 enthalten per Definition schließlich solche Artikel, die weniger häufig benötigt werden. Deshalb werden die Langsamdreher-Lagerbehälter 20 in diesem Durchlaufkanal 24 vorzugsweise bereits sequenziert angeliefert.

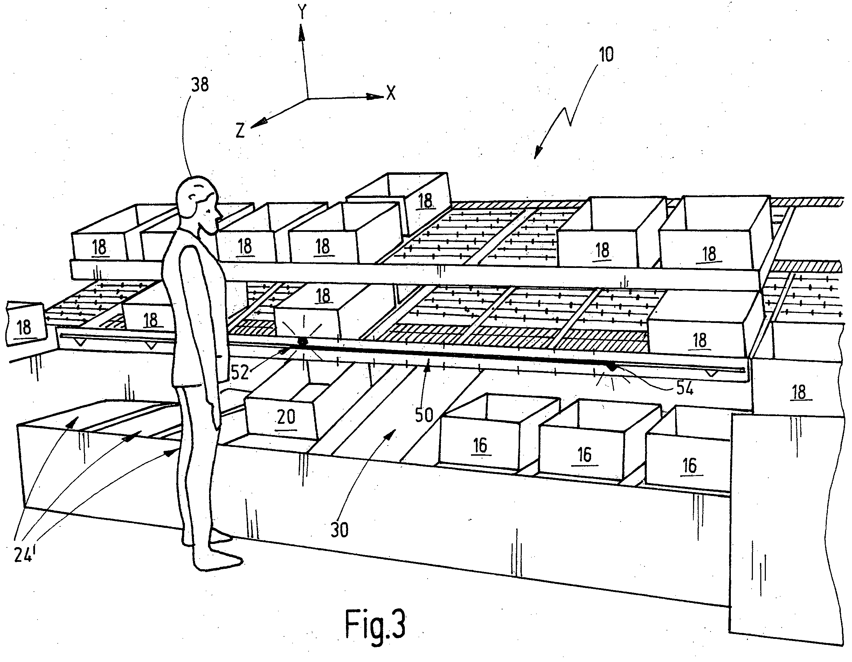

Um eine Fehlkommissionierungsrate möglichst gering zu halten, kann der Kommissionierarbeitsplatz 10 um ein Kommissionierpersonführungssystem 50 erweitert werden, wie es exemplarisch in Fig. 3 gezeigt ist. Die Fig. 3 zeigt den Kommissionierarbeitsplatz 10 der Fig. 1, jedoch mit einem zusätzlichen Kommissionierperson-Führungssystem 50, welches mit selektiv auswählbaren Leuchtmitteln ausgestattet ist. Im Beispiel der Fig. 3 handelt es sich um einen abschnittsweise aktivierbaren Leuchtstreifen, der mit Lampen 52 für Lagerbehälter 14 und Lampen 54 für Auftragsbehälter 16 zusammenwirkt. In der Fig. 3 sollen Artikel aus dem Schnelldreher-Lagerbehälter 18 direkt vor der Kommissionierperson 38 entnommen werden, der sich in der zweiten Andienungsebene 22-2 befindet. Deshalb leuchtet die Lampe 52 auf. Der gegriffene Artikel soll an den mittleren Auftragsbehälter 16 der drei rechts dargestellten Auftragsbehälter 16 abgegeben werden. Aus diesem Grund leuchtet über dem mittleren Auftragsbehälter 16 ebenfalls eine Leuchte 54 auf. Der Weg zwischen der Leuchte 52 und der Leuchte 54 ist ebenfalls beleuchtet.

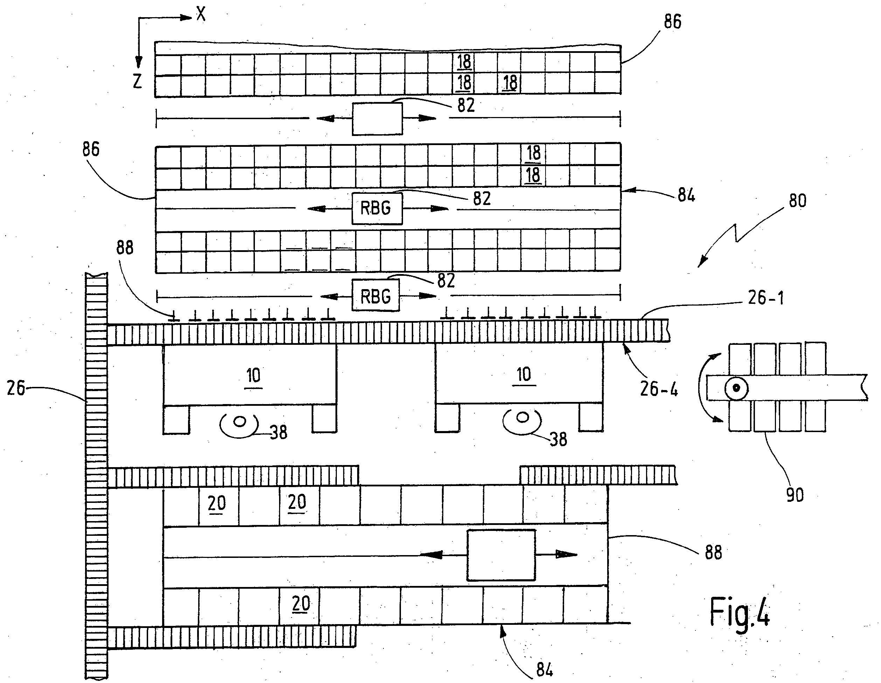

Fig. 4 zeigt eine Draufsicht auf ein Lager- und Kommissioniersystem 80 gemäß der vorliegenden Erfindung, das wiederum ein oder mehrere Kommissionierarbeitsplätze 10 aufweist.

In der Fig. 4 sind zentral zwei Kommissionierarbeitsplätze 10 gezeigt, die jeweils von einer Kommissionierperson 38 bedient werden. Die Kommissionierarbeitsplätze 10 sind an eine Fördertechnik 26 angeschlossen, die durch den Bereich des Kommissionierarbeitsplatzes 10 hindurch läuft. Die Fördertechnik 26 kann mehrere Ebenen aufweisen. Oben soll hier exemplarisch wieder die Lagerbehälter-Fördertechnik 26-1 angeordnet sein, wie es in Fig. 2 gezeigt ist. Ganz unten ist die Auftragsbehälter-Fördertechnik 26-4 angeordnet, wie es ebenfalls in Fig. 2 gezeigt ist.

An der Rückseite der Kommissionierarbeitsplätze 10 gegenüberliegend ist ein Regalbediengerät 82 angeordnet, welches Schnelldreher-Lagerbehälter 18 aus einem Behälterregallager 84 entnehmen und an die Kommissionierarbeitsplätze 10 abgeben kann. Das Behälterregallager 84 kann mehrere Bereiche aufweisen, wie es nachfolgend noch genauer erläutert werden wird. Das RBG 82 bedient sich aus einem AKL (automatisches Kleinteilelager) 86 und gibt entnommene Schnelldreher-Lagerbehälter 18 beispielsweise direkt an die zweite Andienungsebene 22-2 ab. In diesem Fall kann man auf die zweite Lagerbehälter-Fördertechnik 26-2 verzichten. Im Bereich der ersten Lagerbehälter-Fördertechnik 26-1 sind exemplarische Schieber 88 gezeigt.

Langsamdreher-Lagerbehälter 20 werden im Beispiel des Systems 80 der Fig. 4 in einem zweiten Bereich 88 (z.B. SQS von SSI Schäfer) bevorratet, der weiter entfernt zu den Kommissionierarbeitsplätzen 10 als das AKL 86 liegt. Mit der Entfernung ist hier der Transportweg gemeint, den ein Lagerbehälter 14 zurücklegen muss, um aus seinem Behälterregallager 84 in einen Lagerbehälter-Durchlaufkanal 24 zu gelangen.

Der zweite Bereich 88 ist über die Fördertechnik 26 an die Kommissionierarbeitsplätze 10 angeschlossen. Die Fördertechnik 26 dient auch zum Zurückführen leerer Lagerbehälter 14 in ihre jeweiligen Bereiche 86 oder 88.

Des Weiteren ist in Fig. 4 exemplarisch ein Karussellregal 90 gezeigt, das z.B. zur Versorgung der Kommissionierarbeitsplätze 10 mit Mitteldreher-Lagerbehältern vorgesehen sein kann.

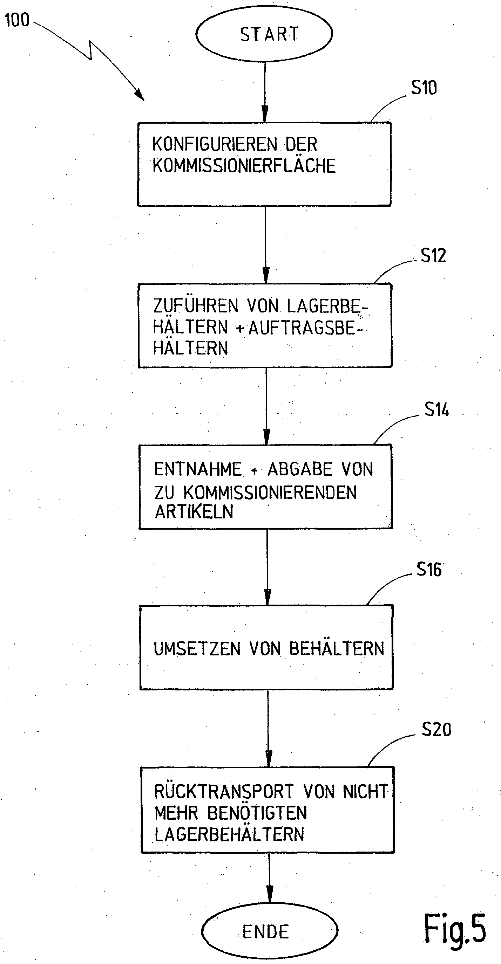

Fig. 5 zeigt ein Flussdiagramm eines Verfahrens 100 zum Zu- und Abführen von Behältern (Schnelldreher-Lagerbehälter 18, Langsamdreher-Lagerbehälter 20 und/oder Auftragsbehälter 16) zu einem der Kommissionierarbeitsplätze 10. Es umfasst die folgenden Schritte: Konfigurieren (S10) der Kommissionierfläche 12 derart, dass die Kanäle 24 und 24' jeweils einem der verschiedenen Behälter 16, 18 oder 20 zugewiesen sind; Zuführen (S12) solcher Lagerbehälter 14 an die Andienungsplätze 25 in der Kommissionierfläche 12, die zum (batchartigen) Abarbeiten von Kommissionieraufträgen benötigt werden, über unidirektional betriebene Kanäle 24, Entnehmen (S14) von benötigten Artikeln und Abgeben in vorbestimmte Auftragsbehälter 16; manuelles Umsetzen (S18) von nicht mehr benötigten Lagerbehältern 14 in einen bidirektional betriebenen Kanal 24' oder 30; und Rücktransportieren (S20) der nicht mehr benötigten Lagerbehälter 14 in Richtung eines Behälterregallagers 82.

Die oben beschriebene Erfindung lässt mehrere Alternativen zu.

Durchlaufkanäle 24 für die Schnelldreher-Lagerbehälter 18 können, wie bereits erwähnt, direkt von einem AKL-RBG 82 bedient werden. In diesem Fall werden die Kommissionierarbeitsplätze 10 entlang eines AKL-Regals 86 angeordnet.

Eine zentrale Entnahineposition für Mittel- und Langsamdreher-Lagerbehälter 20 wird über andere Behälterlagerregale 88 oder 90, z.B. über eine Fördertechnik 26, bedient.

Wenn sich ein Artikelsortiment-Verhältnis von A-Artikeln hin zu B-/C-Artikeln verschiebt, müssen die entsprechenden Behälterlagerregale gegebenenfalls näher relativ zu den Kommissionierarbeitsplätzen gebracht werden.

Die Andienungsplätze 25 können anders konfiguriert werden. Es können mehr oder weniger Andienungsplätze 25 vorgesehen werden. Es wird erwartet, dass das Konzept der vorliegenden Erfindung gut bis ca. 35-40 Schnelldreher-Lagerbehälter 18 funktioniert.

Mit dem erfindungsgemäßen Kommissionierarbeitsplatz 10 können A-, B- und C-Artikel effizient an einem universelle Arbeitsplatz kommissioniert werden. Die konventionelle Bearbeitung von Schnelldrehern (Mann-zur-Ware) kann aufgegeben werden.

Durch die Integration von Schnelldrehern und Mittel- oder Langsamdrehern ist eine Auftragsbearbeitung einstufig und damit schneller und weniger komplex.

Bei häufig wechselnden A-Artikeln (z.B. beim Teleshopping oder bei saison-/tagesaktuellen Katalogen) entfällt der sonst übliche Umräumaufwand im Lager (Ware zu und von Schnelldreherplätzen an andere Plätze).

Gemäß der vorliegenden Erfindung kann ein Wechsel der Schnelldreher sogar im laufenden Betrieb (z.B. mitten in einer Schicht) erfolgen.

Es versteht sich, dass eine übergeordnete Steuereinrichtung, wie z.B. ein Materialflussrechner oder ein Lagerverwaltungsrechner, dafür Sorge trägt, dass die Schnelldreher-Lagerbehälter immer wieder aufgefüllt werden, wenn ein Schnelldreher-Lagerbehälter auf einem Andienungsplatz 25 geleert und über den Kanal 30 abtransportiert ist. Des Weiteren sorgt diese Steuereinrichtung dafür, dass Langsamdreher-Lagerbehälter immer rechtzeitig am Kommissionierarbeitsplatz 10 sind, um einen Kommissionierauftrag (Auftragsbehälter) bedienen zu können, bei dem der Langsamdreher vorkommt bzw. benötigt wird. Üblicherweise eilen die Langsamdreher-Lagerbehälter ihren - über den Kommissionierauftrag zugehörigen - Auftragsbehältern hinterher, d.h. die Steuereinrichtung versucht dafür zu sorgen, dass, wenn ein Auftragsbehälter an einem Kommissionierarbeitsplatz 10 ankommt, die Langsamdreher-Lagerbehälter schon da sind oder zumindest zeitnah eintreffen.

Üblicherweise wird ein Kommissionierarbeitsplatz immer wieder mit Schnelldreher-Lagerbehältern eines gleichen Artikeltyps versorgt, d.h. an einem Kommissionierarbeitsplatz stehen vorzugsweise immer die gleichen Schnelldreherartikeltypen zur Kommissionierung bereit. Die Langsamdreher-Artikletypen hingegen können variieren.

Die Lagerbehälter werden vorzugsweise sortenrein bereitgestellt. Sie können aber auch Fachunterteilungen aufweisen, um mehrere verschiedene Artikeltypen gleichzeitig bereitzustellen. Insbesondere Langsamdreher-Lagerbehälter können derartige Fachaufteilungen aufweisen.

## Patentansprüche

1. Automatisierter Kommissionierarbeitsplatz (10) zum manuellen Kommissionieren von Artikeln aus Lagerbehältern (14) in zumindest einen Auftragsbehälter (16) gemäß einem Kommissionierauftrag, der aus mehreren verschiedenen Artikeln bestehen kann, wobei die Lagerbehälter (14) Schnelldreher-Lagerbehälter (18) für schnelldrehende Artikel und Langsamdreher-Lagerbehälter (20) für langsamdrehende Artikel aufweisen, die dem Kommissionierarbeitsplatz (10) zusammen mit dem mindestens einen Auftragsbehälter (16) zugeführt werden, wobei der Kommissionierarbeitsplatz (10) eine Vielzahl von unidirektional betreibbaren Lagerbehälter-Durchlaufkanälen (24) und mindestens einen bidirektional betriebenen Auftragsbehälter-Bereitstellungskanal (24') aufweist, wobei jedem Auftragsbehälter-Bereitstellungskanal (24') ein Auftragsbehälter (16) zugewiesen ist und wobei, jedem Durchlaufkanal (24) ein oder mehrere Schnelldreher-Lagerbehälter (18) oder Langsamdreher-Lagerbehälter (20) zugewiesen sind, wobei alle Kanäle (24, 24') ein Ende aufweisen, das einen Andienungsplatz (25) definiert, wobei die Andienungsplätze (25) nebeneinander und in übereinander angeordneten Andienungsebenen (22; 22-1, 22-2, 22-3) derart angeordnet sind, dass die Andienungsplätze (25) eine Kommissionierfläche (12) definieren, aus der eine Kommissionierperson (38) auf eine ergonomisch günstige Weise in jeden angedienten Lagerbehälter (14) zur Entnahme eines zu kommissionierenden Artikels greifen kann und entnommene Artikel an den zumindest einen Auftragsbehälter (16) abgeben kann, **dadurch gekennzeichnet daß** die Kanäle (24, 24') im Wesentlichen parallel zueinander angeordnet sind.

2. Kommissionierarbeitsplatz nach Anspruch 1, wobei'mindestens ein weiterer Kanal (30) zum Abtransport von vollständig oder teilweise geleerten Lagerbehältern (14) vorgesehen ist, der parallel zu den anderen Kanälen (24, 24') orientiert ist und dessen eines Ende ebenfalls in der Kommissionierfläche (12) liegt.

3. Kommissionierarbeitsplatz nach Anspruch 2, wobei jeder weitere Kanal (30) eingerichtet ist, unidirektional entgegengesetzt zu den Lagerbehälter-Drucklaufkanälen betrieben zu werden, um Behälter abzuführen.

4. Kommissionierarbeitsplatz nach Anspruch 2 oder 3, wobei der mindestens eine weitere Kanal (30) mit einer Fördereinrichtung (32) versehen ist, so dass vollständig oder teilweise geleerte Lagerbehälter (14) automatisiert aus der Kommissionierfläche (12) abgeführt werden können, indem die Kommissionierperson (38) die vollständig oder teilweise geleerten Lagerbehälter (14) von ihrem jeweiligen Andienungsplatz (25) nimmt und manuell in den mindestens einen weiteren Kanal (30) umsetzt.

5. Kommissionierarbeitsplatz nach Anspruch 2, 3 oder 4, wobei die Kommissionierfläche (12) ausschließlich Andienungsplätze (25) und das Ende jedes weiteren Kanals (30) aufweist.

6. Kommissionierplatz nach einem der vorhergehenden Ansprüche, wobei der zumindest eine Auftragsbehälter-Bereitstellungskanal (24') und vorzugsweise jeder weitere Kanal (30) in einer untersten Andienungsebene (22-3) angeordnet sind.

7. Kommissionierarbeitsplatz nach einem der vorhergehenden Ansprüche, wobei in den oberen Andienungsebenen (22-1, 22-2) die Lagerbehälter-Durchlaufkanäle (24) angeordnet sind.

8. Kommissionierarbeitsplatz nach einem der vorhergehenden Ansprüche, der an eine Fördertechnik (26; 26-1, 26-2, 26-3, 26-4) zur Zu- und Abführung von Lagerbehältern (14; 18, 20) und/oder Auftragsbehältern (16) angeschlossen ist.

9. Kommissionierarbeitsplatz nach einem der vorhergehenden Ansprüche, wobei die Lagerbehälter-Durchlaufkanäle (24) Schwerkraftrollenbahnen (36) sind, die in Richtung (Z) der Kommissionierperson (38) abfallen, und wobei der mindestens eine Auftragsbehälter-Bereitstellungskanal (24') mit einer Fördereinrichtung (34) versehen ist, so dass ein Behälter (14, 16) bidirektional innerhalb des Auftragsbehälter-Bereitstellungskanals (24') transportierbar ist.

10. Kommissionierarbeitsplatz nach einem der vorhergehenden Ansprüche, wobei in der Kommissionierfläche (12) zumindest solche Andienungsebenen (22-1, 22-2), die Lagerbehälter-Durchlaufkanäle (24) aufweisen, jeweils mit einem Leuchtpfad (50) versehen sind, der wahlweise derart beleuchtbar ist, dass der Kommissionierperson (38) visuell angezeigt wird, aus welchem angedientem Lagerbehälter (14) ein Artikel entnommen und an welchen Auftragsbehälter (16) der entnommene Artikel abzugeben ist.

11. Kommissionierarbeitsplatz nach einem der vorhergehenden Ansprüche, wobei alle Kanäle (24, 24', 30) senkrecht zur Kommissionierfläche (12) orientiert sind.

12. Kommissionierarbeitsplatz nach einem der vorhergehenden Ansprüche, wobei die Kommissionierfläche (12) eine zusammenhängende Fläche bildet.

13. Lager- und Kommissioniersystem (80) aufweisend: mindestens einen Kommissionierarbeitsplatz (10) nach einem der vorhergehenden Ansprüche; ein Behälterregallager (84), wo die Lagerbehälter (14) zwischengespeichert werden; und eine Auftragsbehälter-Fördertechnik (26-4) zur Zu- und Abführung von Auftragsbehältern (16) an den und von dem mindestens einen Kommissionierarbeitsplatz (10).

14. Lager- und Kommissioniersystem nach Anspruch 13, wobei der mindestens eine Kommissionierarbeitsplatz (10) derart relativ zum Behälterregallager (84) angeordnet ist, dass ein Regalbediengerät (82) des Behälterregallagers (84) Schnelldreher-Lagerbehälter (18) in Querrichtung (Z) direkt zwischen dem Behälterregallager (84) und solchen Lagerbehälter-Durchlaufkanälen (24) des mindestens einen Kommissionierarbeitsplatzes (10) transferieren kann, die den Schnelldreher-Lagerbehältern (18) zugewiesen sind.

15. Lager- und Kommissioniersystem nach einem der Ansprüche 13 oder 14, wobei ferner mindestens eine Lagerbehälter-Fördertechnik (26-1, 26-2, 26-3) zur Zu- und Abführung von Lagerbehältern (14) an die und von den Läger-behälter-Durchlaufkanälen (24) vorgesehen ist, die jeweils einerseits mit den Lagerbehälter-Durchlaufkanälen (24) an einer der Kommissionierfläche (12) gegenüberliegenden Seite und andererseits mit dem Behälterregallager (84) verbunden sind.

16. Lager- und Kommissioniersystem nach einem der Ansprüche 13 bis 15, wobei das Behälterregallager (84) räumlich in mehrere Bereiche aufgeteilt ist, wobei ein Schnelldreher-Bereich (86) näher relativ zu dem mindestens einen Kommissionierarbeitsplatz (10) als ein Langsamdreher-Bereich (88) liegt.

17. Verfahren (100) zum Zuführen und Abführen von Behältern, umfassend Schnelldreher-Lagerbehälter, Langsamdreher-Lagerbehälter (20) und Auftragsbehälter (16), zu und von einem Kommissionierarbeitsplatz (10) gemäß einem der Ansprüche 1 bis 12, mit den folgenden Schritten:
- Konfigurieren (S10) der Kommissionierfläche (12) derart, dass die Kanäle (24, 24') jeweils einem der verschiedenen Behälter (16, 18, 20) zugewiesen sind;
- Zuführen (S12) solcher Lagerbehälter (14) an die Andienungsplätze (25) in der Kommissionierfläche (12), die zum (batchartigen) Abarbeiten von Kommissionieraufträgen benötigt werden, über unidirektional betriebene Kanäle (24);
- Entnehmen (S14) von benötigten Artikeln und Abgeben in vorbestimmte Auftragsbehälter (16);
- Umsetzen (S16) von nicht mehr benötigten Lagerbehältern (14) in einen bidirektional betriebenen Kanal (24', 30); und
- Rücktransportieren (S18) der nicht mehr benötigten Lagerbehälter (14) in Richtung eines Behälterregallagers (82).

## Claims

1. Automated picking-work station (10) for manually picking articles from storage containers (14) into at least one order container (16) in accordance with a picking order which can comprise a plurality of different articles, wherein the storage containers (14) comprise fast-mover storage containers (18) for fast-moving articles and slow-mover storage containers (20) for slow-moving articles, which are delivered to the picking-work station (10) together with the at least one order container (16), wherein the picking-work station (10) comprises a plurality of unidirectionally operative storage-container flow channels (24) and at least one bidirectionally operated order-container provision channel (24'), wherein each of the order-container provision channels (24') has assigned one order container (16), and wherein each of the flow channels (24) has assigned one or more fast-mover storage containers (18) or slow-mover storage containers (20), wherein each of the channels (24, 24') comprises an end defining a delivery location (25), wherein the delivery locations (25) are arranged side-by-side and in delivery planes (22; 22-1, 22-2, 22-3), which are arranged on top of each other, such that the delivery locations (25) define a picking area (12) where a picking person (38) can reach into each delivered storage container (14) in an ergonomic advantageous manner for the purpose of removing a to-be-picked article and can give removed articles into the at least one order container (16), **characterized in that** the channels (24, 24') are arranged substantially in parallel to each other.

2. The picking-work station of claim 1, wherein at least one additional channel (30) for discharging storage containers (14), which are completely or partially emptied, is provided, the at least one additional channel being orientated in parallel to the other channels (24, 24') and an end thereof is also arranged in the picking area (12).

3. The picking-work station of claim 2, wherein each additional channel (30) is configured to be operated unidirectionally and oppositely to the storage-container flow channels, in order to discharge containers.

4. The picking-work station of claim 2 or 3, wherein the at least one additional channel (30) is provided with a conveying device (32) so that completely and partially emptied storage containers (14) can be discharged in an automated manner from the picking area (12) by causing the picking person (38) to take the completely or partially emptied storage containers (14) from their respective delivery location (25) and to transfer them manually into the at least one additional channel (30).

5. The picking-work station of claim 2, 3 or 4, wherein the picking area (12) comprises delivery locations (25) only and the end of each additional channel (30).

6. The picking-work station of one of the preceding claims, wherein the at least one order-container provision channel (24') and preferably each of the additional channels (30) are arranged in a lowest delivery plane (22-3).

7. The picking-work station of one of the preceding claims, wherein the storage-container flow channels (24) are arranged in the upper delivery planes (22-1, 22-2).

8. The picking-work station of one of the preceding claims being connected to a conveying system (26; 26-1, 26-2, 26-3, 26-4) for delivering and discharging storage containers (14; 18, 20) and/or order containers (16).

9. The picking-work station of one of the preceding claims, wherein the storage-container flow channels (24) are gravity-roller tracks (36), which decline in a direction (Z) of the picking person (38), and wherein the at least one order-container provision channel (24') is provided with a conveying device (34) so that a container (14, 16) can be transported bidirectionally within the order-container provision channel (24').

10. The picking-work station of one of the preceding claims, wherein in the picking area (12) at least such delivery planes (22-1, 22-2), which comprise the storage-container flow channels (24), are respectively provided with an illumination path (50) which can be illuminated selectively such that the picking person (38) gets visually indicated from which of the delivered storage containers (14) an article is to be removed and to which of the order container (16) the removed article is to be given.

11. The picking-work station of one of the preceding claims, wherein each of the channels (24, 24', 30) is perpendicular to the picking area (12).

12. The picking-work station of one of the preceding claims, wherein the picking area (12) forms a continuous area.

13. A storage and picking system (80) comprising: at least one picking-work station (10) of one of the preceding claims; a container-rack warehouse (84) where the storage containers (14) are buffered; and an order-container conveying system (26-4) for delivering and discharging order containers (16) to and from the at least one picking-work station (10).

14. The storage and picking system of claim 13, wherein the at least one picking-work station (10) is arranged relative to the container-rack warehouse (84) such that a storage and retrieval device (82) of the container-rack warehouse (84) can transfer fast-mover storage containers (18) in a transversal direction (Z) directly between the container-rack warehouse (84) and such storage-container flow channels (24) of the at least one picking-work station (10) which are assigned to the fast-mover storage containers (18).

15. The storage and picking system of one of claims 13 or 14, wherein at least one storage-container conveying system (26-1, 26-2, 26-3) is additionally provided for delivering and discharging storage containers (14) to and from the storage-container flow channels (24) which are respectively connected to both the storage-container flow channels (24) at a side opposite to the picking area (12) and the container-rack warehouse (84).

16. The storage and picking system of one of claims 13 to 15, wherein the container-rack warehouse (84) is spatially divided into multiple regions, wherein a fast-mover region (86) is located closer relative to the at least one picking-work station (10) than a slow-mover region (88).

17. A method (100) for delivering and discharging containers which include fast-mover storage containers, slow-mover storage containers (20), and order containers (16), to and from a picking-work station (10) in accordance with one of claims 1 to 12 comprising the steps of:
- configuring (S10) the picking area (12) such that the channels (24, 24') are respectively assigned to one of the different containers (16, 18, 20);
- delivering (S12) such storage containers (14) to the delivery locations (25) in the picking area (12), which are required for the (batch-like) processing of picking orders, via unidirectionally operated channels (24);
- removing (S14) required articles and giving them in predetermined order containers (16);
- transferring (S16) storage containers (14), which are no longer required, into a bidirectianally operated channel (24', 30); and
- transporting back (S18) the storage containers (14), which are no longer required, towards a container-rack warehouse (82).

## Revendications

1. Poste de travail de préparation automatisé (10) pour la préparation manuelle d'articles provenant de conteneurs de stockage (14) dans au moins un conteneur de commande (16) selon un ordre de préparation, qui peut se composer de plusieurs articles différents, les conteneurs de stockage (14) présentant des conteneurs de stockage à rotation rapide (18) pour des articles à rotation rapide et des conteneurs de stockage à rotation lente (20) pour des articles à rotation lente, qui sont acheminés au poste de travail de préparation (10) conjointement avec l'au moins un conteneur de commande (16), le poste de travail de préparation (10) présentant une pluralité de canaux de passage pour conteneurs de stockage (24) pouvant fonctionner dans une seule direction et au moins un canal de fourniture de conteneurs de commande (24') fonctionnant dans deux directions, un conteneur de commande (16) étant associé à chaque canal de fourniture de conteneurs de commande (24') et un ou plusieurs conteneurs de stockage à rotation rapide (18) ou conteneurs de stockage à rotation lente (20) étant associés à chaque canal de passage (24), tous les canaux (24, 24') présentant une extrémité qui définit un poste (25) de mise à disposition, les postes de mise à disposition (25) étant disposés les uns à côté des autres et dans des plans de mise à disposition disposés les uns au-dessus des autres (22 ; 22-1, 22-2, 22-3) de telle sorte que les postes de mise à disposition (25) définissent une surface de préparation (12) depuis laquelle un préparateur de commandes (38) peut agir de manière ergonomiquement favorable dans chaque conteneur de stockage mis à disposition (14) pour prélever un article à préparer et peut délivrer des articles prélevés à l'au moins un conteneur de commande (16), **caractérisé en ce que** les canaux (24, 24') sont disposés essentiellement parallèlement les uns aux autres.

2. Poste de travail de préparation selon la revendication 1, dans lequel au moins un canal supplémentaire (30) est prévu pour l'enlèvement de conteneurs de stockage (14) entièrement ou partiellement vidés, lequel est orienté parallèlement aux autres canaux (24, 24') et dont une extrémité est également située dans la surface de préparation (12).

3. Poste de travail de préparation selon la revendication 2, dans lequel chaque canal supplémentaire (30) est prévu pour fonctionner dans une seule direction en sens inverse des canaux de passage pour conteneurs de stockage, afin d'évacuer des conteneurs.

4. Poste de travail de préparation selon la revendication 2 ou 3, dans lequel l'au moins un canal supplémentaire (30) est pourvu d'un dispositif de transport (32) de telle sorte que des conteneurs de stockage (14) entièrement ou partiellement vidés puissent être évacués de manière automatisée hors de la surface de préparation (12), le préparateur de commandes (38) prenant pour cela les conteneurs de stockage (14) entièrement ou partiellement vidés depuis son poste de mise à disposition respectif (25) et les transférant manuellement à l'au moins un canal supplémentaire (30).

5. Poste de travail de préparation selon la revendication 2, 3 ou 4, dans lequel la surface de préparation (12) présente exclusivement des postes de mise à disposition (25) et l'extrémité de chaque canal supplémentaire (30).

6. Poste de préparation selon l'une quelconque des revendications précédentes, dans lequel l'au moins un canal de fourniture de conteneurs de commande (24') et de préférence chaque canal supplémentaire (30) sont disposés dans un plan de mise à disposition le plus inférieur (22-3).

7. Poste de travail de préparation selon l'une quelconque des revendications précédentes, dans lequel les canaux de passage pour conteneurs de stockage (24) sont disposés dans les plans de mise à disposition supérieurs (22-1, 22-2).

8. Poste de travail de préparation selon l'une quelconque des revendications précédentes, qui est raccordé à une technique de transport (26 ; 26-1, 26-2, 26-3, 26-4) pour l'acheminement et l'évacuation de conteneurs de stockage (14 ; 18, 20) et/ou de conteneurs de commande (16).

9. Poste de travail de préparation selon l'une quelconque des revendications précédentes, dans lequel les canaux de passage pour conteneurs de stockage (24) sont des bandes à rouleaux gravitaires (36) qui tombent dans la direction (Z) du préparateur de commande (38), et dans lequel l'au moins un canal de fourniture de conteneurs de commande (24') est pourvu d'un dispositif de transport (34), de telle sorte qu'un conteneur (14, 16) puisse être transporté dans deux directions à l'intérieur du canal de fourniture de conteneurs de commande (24').

10. Poste de travail de préparation selon l'une quelconque des revendications précédentes, dans lequel, dans la surface de préparation (12), au moins les plans de mise à disposition (22-1, 22-2) qui présentent des canaux de passage pour conteneurs de stockage (24) sont pourvus chacun d'un chemin d'éclairage (50) qui peut être éclairé de manière sélective de telle sorte que le préparateur de commandes (38) puisse voir dans quel conteneur de stockage mis à disposition (14) un article doit être prélevé et dans quel conteneur de commande (16) l'article prélevé doit être déposé.

11. Poste de travail de préparation selon l'une quelconque des revendications précédentes, dans lequel tous les canaux (24, 24', 30) sont orientés perpendiculairement à la surface de préparation (12).

12. Poste de travail de préparation selon l'une quelconque des revendications précédentes, dans lequel la surface de préparation (12) forme une surface continue.

13. Système de stockage et de préparation (80), présentant : au moins un poste de travail de préparation (10) selon l'une quelconque des revendications précédentes ; un magasin à rayonnages pour conteneurs (84), dans lequel les conteneurs de stockage (14) sont entreposés , et une technique de transport de conteneurs de commande (26-4) pour acheminer et évacuer des conteneurs de commande (16) à l'au moins un poste de travail de préparation (10) et depuis celui-ci.

14. Système de stockage et de préparation selon la revendication 13, dans lequel l'au moins un poste de travail de préparation (10) est disposé par rapport au magasin à rayonnages pour conteneurs (84) de telle sorte qu'un appareil de commande de rayonnages (82) du magasin à rayonnages pour conteneurs (84) puisse transférer des conteneurs de stockage à rotation rapide (18) dans la direction transversale (Z) directement entre le magasin à rayonnages pour conteneurs (84) et les canaux de passage pour conteneurs de stockage (24) de l'au moins un poste de travail de préparation (10), qui sont associés aux conteneurs de stockage à rotation rapide (18).

15. Système de stockage et de préparation selon l'une quelconque des revendications 13 et 14, dans lequel en outre au moins une technique de transport de conteneurs de stockage (26-1, 26-2, 26-3) est prévue pour l'acheminement de conteneurs de stockage (14) aux canaux de passage pour conteneurs de stockage (24) et pour leur évacuation depuis ceux-ci, lesquels canaux de passage sont à chaque fois connectés d'une part aux canaux de passage pour conteneurs de stockage (24) au niveau d'un côté opposé de la surface de préparation (12) et d'autre part au magasin à rayonnages pour conteneurs (84).

16. Système de stockage et de préparation selon l'une quelconque des revendications 13 à 15, dans lequel le magasin à rayonnages pour conteneurs (84) est divisé spatialement en plusieurs zones, une zone à rotation rapide (86) étant située plus près par rapport à l'au moins un poste de travail de préparation (10) qu'une zone à rotation lente (88).

17. Procédé (100) pour acheminer et évacuer des conteneurs, comprenant des conteneurs de stockage à rotation rapide, des conteneurs de stockage à rotation lente (20) et des conteneurs de commande (16), à et depuis un poste de travail de préparation (10) selon l'une quelconque des revendications 1 à 12, comprenant les étapes suivantes :
- configuration (S10) de la surface de préparation (12) de telle sorte que les canaux (24, 24') soient à chaque fois associés à l'un des différents conteneurs (16, 18, 20) ;
- acheminement (S12) aux postes de mise à disposition (25) dans la surface de préparation (12) des conteneurs de stockage (14) qui sont requis pour le traitement (par lots) de commandes de préparation, par le biais de canaux fonctionnant dans un seul sens (24) ;
- prélèvement (S14) d'articles requis et dépose dans des conteneurs de commande prédéterminés (16) ;
- transfert (S16) des conteneurs de stockages qui ne sont plus requis (14) dans un canal fonctionnant dans les deux sens (24', 30) ; et
- retour (S18) des conteneurs de stockages qui ne sont plus requis (14) dans la direction d'un magasin à rayonnages pour conteneurs (82).
